# EUROPEAN PATENT SPECIFICATION

(11) **EP 2 430 624 B1**
(45) Date of publication and mention of the grant of the patent: **15.08.2012**
(21) Application number: 09787766.6
(22) Date of filing: 30.06.2009
(51) Int. Cl.: G08G 1/01

(54) **AN ELECTRONIC SYSTEM AND A METHOD FOR THE AUTOMATIC IDENTIFICATION OF A VEHICLE**
ELEKTRONISCHES SYSTEM UND VERFAHREN ZUR AUTOMATISCHEN IDENTIFIKATION EINES FAHRZEUGS
SYSTÈME ÉLECTRONIQUE ET PROCÉDÉ POUR L'IDENTIFICATION AUTOMATIQUE D'UN VÉHICULE

(30) Priority: 15.05.2009 IT BO20090318
(43) Date of publication of application: 21.03.2012
(73) Proprietor: I.CAR S.r.l., 40128 Bologna (IT)
(72) Inventor: MURIANA, Roberto, I-40123 Bologna (BO) (IT)
(74) Representative: Provvisionato, Paolo
(86) International application number: PCT/IT2009/000287
(87) International publication number: WO 2010/131278

(56) References cited:
- EP-A2- 1 903 507
- WO-A1-2008/035721
- DE-A1- 4 201 894
- DE-A1-102007 035 351
- FR-A1- 2 717 940
- US-A1- 2006 155 430

## Description

The present invention relates to the field of object-identification systems and, in particular but not exclusively, to electronic motor-vehicle identification systems.

The present invention has been developed with particular regard to an electronic system and to a method for the automatic identification of a vehicle, which can identify a motor vehicle and automatically acquire data relating to the vehicle by means of electronic instrumentation.

Systems for the automatic identification of data relating to an object such as, for example, bar codes which use a sequence of bars of different thicknesses to encode a set of data and/or information have been known for some time. The sequence of bars can be read and interpreted by an electronic instrument such as an optical reader to provide the operator with the data relating to the object.

Systems for the identification of motor vehicles, for example by means of a number or an identification code of the vehicle such as those used by specific public registers for vehicle categories have also been known for some time. In the case of motor vehicles, the make, model, cylinder capacity, and chassis number, as well as the registered data of the owner of the motor vehicle are associated with a registration number. The data is kept in the above-mentioned registers and is usually shown on the motor-vehicle's registration document. The data can be retrieved from the registers when required by searching for the registration number or can be checked by consulting the registration document.

Such a system is known from, for example, DE-A1-4201894.

One of the main disadvantages of these known identification systems is that the original identification code may somehow be eliminated, replaced, forged, or removed from the vehicle, making it impossible to identify or leading to its incorrect identification. For example, a car's number plate may be replaced by a plate from another vehicle or by a forged plate or a registration document may be stolen or forged.

Another disadvantage is the sometimes complex operation of updating the identification data associated with the vehicle's identification code, and the time required to perform that operation.

The object of the present invention is to overcome the disadvantages of the known systems by providing an automatic identification system and method which enable the vehicle to be identified quickly and with a very low margin of error.

Another object of the present invention is to provide an automatic identification system and method which allow one or more items of data associated with the vehicle to be updated quickly and securely.

A further object of the present invention is to provide a system the manufacture and application of which are simple and which is easy to use, and a method which is easy to implement, both of which lead to reduced economic expenditure.

To achieve these objects, the subject of the present invention is a system and a method as defined in the appended claims.

One of the main advantages of the present invention is that the system affords greater certainty in the identification of the vehicle and, in the event of theft or loss, the owner therefore has a greater chance of tracking down his vehicle. The identification system of the present invention, as well as the archived data relating to the vehicle, could be put at the disposal of the police authorities. This facility could be reflected in the arrangement of an insurance contract since the insurance company would reduce the risk of losses.

According to a particularly advantageous embodiment of the present invention, the information connected with the vehicle may also include information on the actual condition of the vehicle. Over the years, the vehicle may have undergone many changes, either for the better due, for example, to efficient maintenance, or for the worse, due, for example, to neglect, to modifications of the vehicle with unsuitable parts and/or components or to unreported accidents. The actual value of the vehicle could therefore vary substantially with respect to a theoretical evaluation performed on standard parameters connected, for example, with the age of the vehicle.

Another advantage of the present invention is that all of the information relating to the vehicle can be controlled in electronic format and remotely for a more accurate evaluation thereof. For example, in the event of a sale, the information in the identification system of the present invention can be transmitted by remote transmission systems, for example, electronic mail and/or Internet, to promote the remote sale of the vehicle. Or, in the event of checking by the police authorities, the vehicle information associated with the vehicle's identification code can be retrieved quickly and remotely, facilitating comparison with the actual information shown on the registration document.

Further characteristics and advantages of the present invention will become clear from the following detailed description of a preferred embodiment which is given purely by way of non-limiting example.

An automatic vehicle identification system according to the present invention comprises electronic identification means, for example, but in non-limiting manner, at least two tags (*electronic tagging*) or transponders or labels which can store data and transmit it and/or receive it by means of radio frequency identification technology (RFID). The tags comprise an electronic memory, preferably a microchip, in which a predetermined amount of data can be stored. The tags also comprise an antenna and may also be provided with an external electrical supply, for example, a storage device, preferably a battery. According to one embodiment of the present invention, the one of the microchips comprises a radio frequency transmission system with HF technology in which up to 64 Kbytes of data can be stored and which operates, for example, but in non-limiting manner, at a frequency of 13.56 Mhz. The HF tags can be read and/or written at a distance of between about 10 and 90 cm.

The data that can be stored on the microchip may be of various types and kinds. For example, but in non-limiting manner, one or more of the following data may be entered: name and tax code of the owner of the vehicle and/or VAT registration number if the owner of the vehicle is a body corporate, type of vehicle, chassis number of the vehicle, vehicle registration number, and date of first registration. Similarly, it will be possible to store additional information on the microchip, relating to technical characteristics of the vehicle such as, for example, external characteristics, and technical characteristics connected with vehicle safety. In any case, a vehicle identification code which will be usable to obtain further information entered in a central archive will also be stored on the microchip.

The tag is associated with the vehicle, for example, but in non-limiting manner, is fitted to a portion of the vehicle's structure, even more preferably, is fixed to one of the vehicle windows, and/or to the dashboard and/or to any other visible portion of the vehicle.

The automatic identification system of the present invention further comprises means for reading and/or writing the electronic identification means, for example but in non-limiting manner, a radio frequency device for reading and writing the microchip. The device comprises an antenna, an encoding/recognition device and a user interface for the entry and display of the data input to and output from the microchip.

The data entered on the microchip is preferably encrypted and/or encoded in accordance with known encryption and/or encoding systems so that it cannot be read and/or modified by means of any reading and writing device and/or by unauthorized persons without a predetermined access key. According to one embodiment of the present invention, the encrypted system comprises a univocal microchip code provided by the manufacturer and a security code, both of which are encrypted in accordance with one or more known encoding algorithms and/or a combination thereof.

The system of the present invention also comprises a further tag, again with RFID technology, which can store a predetermined quantity of information. The further tag is associated with the vehicle, preferably fitted on a portion of the vehicle structure, for example, in a position that is not readily visible. Even more preferably, the further tag is fixed to the vehicle directly by its owner so that no-one other than the owner knows its exact location. For example, the tag could be fixed under one of the seats or inside the dashboard or on the internal wall of a glove compartment or in any other position that is not readily visible.

According to the invention this further microchip comprises a radio frequency transmission system with UHF technology operating, for example, but in non-limiting manner at frequencies of 852 - 926 Mhz. The UHF tags can be read and/or written at a distance of between about 300 and 1000 cm. This characteristic does not allow an unauthorized user to identify the position of the further microchip by means of the reading/writing device and thus prevents its removal.

Naturally a person skilled in the art will be able to identify further radio frequency communication systems other than those described above and/or a combination thereof. Similarly, a person skilled in the art will be able to identify different encrypting and/or encoding algorithms, without thereby departing from the scope of the present invention.

The reading/writing devices which can read and/or write data on the tags described above are supplied to predetermined centres which are authorized and qualified to perform the vehicle identification service and the vehicle data updating service. The reading/writing devices will advantageously also be provided directly to the police authorities or made available at the authorized centres so as to enable the authorities to identify a vehicle quickly and automatically during their normal patrolling activities or special activities for tracking down and stopping predetermined vehicles, for example, during the operation of roadblocks.

Both the authorized centres and the police authorities will also have access, as a result of the identification of the vehicle, to a centralized archive containing further vehicle data connected with its identification code.

According to one embodiment of the present invention, the reading and writing device comprises additional electronic storage means, for example, an electronic memory, on which all of the reading and writing activities performed by the device as well as further additional information such as the date and identification of the operator who performed the said activities are stored.

An automatic vehicle identification method according to the present invention comprises a step of creating and subsequently controlling a corresponding database. This step in turn comprises the provision of means for archiving a plurality of data and, in particular, of a general archive of sets of data. Each set of data is connected with a specific vehicle and comprises a file containing registration data, technical data, and additional information relating to the vehicle. For example, in the case of a motor car, the technical data may comprise the registration number, make, model, cylinder capacity, engine power, chassis number, type of tyres, and type of use. The method further comprises the provision of storage means, for example but in non-limiting manner, electronic storage means for storing the files, and transmission means for transferring the data contained in the files within the general archive. Moreover, the method comprises the provision of cataloguing means for cataloguing and indexing the files contained in the general archive.

All of the data is stored on the electronic identification means described above and associated with the vehicle, and also on an electronic substrate which is kept remotely, for example, at a data collection centre. Preferably, each file can be linked to the public registers so that it can be updated in real time in the event of changes to the registration data that is present in the register.

All of the files relating to respective vehicles are then collected and organized in a manner such as to create a single general archive, for example but in non-limiting manner, an electronic database from which, at a subsequent time, the necessary data can be retrieved quickly and easily. The archive can be structured and organized in accordance with predetermined indexing parameters which enable all of the files that are present to be catalogued in accordance with a predetermined logic and may comprise, in the case of an electronic database, indexed and non-indexed search engines for easier and quicker consultation.

According to a preferred embodiment of the present invention, a vehicle which is to be entered in the database of the identification system of the present invention is brought to an authorized identification centre. A file individualized for that vehicle is created in the authorized centre by the recording of the technical data of the motor vehicle on the electronic identification means associated with the vehicle and, at the same time, on an electronic processor.

The file thus created is stored on the electronic processor and entered in the general database by electronic transmission means such as, for example, a remote connection via a modem. Alternatively, the storage may be performed on a transportable electronic substrate such as, for example a CD-ROM or other similar device which is sent to the data collection centre by normal despatch means (post, courier).

A copy of the file on the electronic identification means is issued to the owner of the vehicle, preferably on one or two tags so that the first can be fitted in a visible position in the vehicle and the second in a non-visible position of his choice.

Whenever it is necessary to identify a vehicle comprising one of the above-described electronic identification means, it will suffice, for all of the operators who are authorized to access the system of the present invention and/or who are in possession of authorized reading devices, to place the reading device in the vicinity of the visible tag disposed on the vehicle in order to have access, immediately and automatically, to the information contained therein. Similarly, when the vehicle also comprises one of the hidden tags; and if the visible tag has been removed or tampered with, the qualified operators will nevertheless be able to access the information immediately and automatically without the driver of the vehicle being aware of it or pointing out the location of the hidden tag.

In the eventuality of one or more of the additional items of data that were originally present in the file being changed, for example, in the event of an accident, during a periodic mechanical check, or in the event of the voluntary addition and/or removal of above-mentioned elements of the vehicle, these changes should also be entered in the file through one of the authorized identification centres or through other authorized bodies. The information stored in the general database is thus updated constantly and in a timely manner. In these centres there will also be provision for the information that is present in the tag or tags associated with the vehicle to be updated and/or modified by means of the above-described electronic reading and writing device. According to a particularly advantageous characteristic of the present invention, the method of identifying and cataloguing vehicles and of creating and subsequently controlling a corresponding database also comprises a step of providing security and certification means for the data entered and stored in the system. In particular, each authorized identification centre is provided with an identification code issued by a predetermined certification authority which enables the operators of the authorized centre to access the general database. The identification code is added to each file created by each authorized centre so that, before entering new data in the general database, it is possible to check the correct provenance of each file and authorize the entry of the data if the identification code is authentic. The identification code can also be used by the owner of the vehicle to check the effective certification of the authorized centre to which he intends to take his vehicle. The identification code also serves to guarantee the correctness and authenticity of the data contained in the file to all those who have to consult the file in order to extract information on the vehicle such as, for example, vehicle maintenance centres and/or police authorities.

The method of the present invention enables a detailed archive of all of the vehicles in circulation in a national territory to be created. This archive can be put at the disposal of all insurance companies and police authorities but also, for example, of used car vendors, or accessory producers and, in general, all operators in the automotive aftermarket. Finally, the information on the vehicles which is kept in the archive can be processed in accordance with one or more parameters of interest so as to obtain reports indicative of market trends in the individualization of customers' vehicles or customers' tastes with regard to one or more of the elements of a vehicle indicated above.

Additional services are associated with the electronic identification system to afford particular advantages for users of the system. For example, these may include general assistance services such as towing of the vehicle or a replacement car in the event of breakdown, accident, fire, theft, complete and/or partial theft with violence, the provision of a taxi, the supply of fuel, tyre punctures, fitting of snow chains.

Additional insurance services such as insurance against fire and theft, natural events, socio-political events, acts of vandalism and criminal acts in general, breakage of windows, complementary and supplementary damage insurance, insurance against collision, Kasko insurance, public liability car insurance (PLI) are also associated with the electronic identification system.

According to another preferred embodiment of the present invention, the identification system described up to now is associated with a vehicle identification system which uses a method of permanent marking of the windows of a motor vehicle and a device particularly suitable for performing such marking. An identification code of the vehicle, for example, a number containing alphanumeric characters, preferably but in non-limiting manner, the registration number or chassis number of the motor vehicle is imprinted on the vehicle's windows. The company that performs the marking operation keeps in its archives and/or registers the data relating to the vehicle, correlated with the above-mentioned code. It is thus possible, in the event of a checking operation, to ensure that the vehicle's registration number or its chassis number correspond to that engraved on the windows. This greatly discourages any theft of the vehicle since it would oblige the thief to change all of the windows marked if he wished to change the registration number or the chassis number of the motor vehicle illegally.

The marking device comprises, for example, a sand-blasting gun with a nozzle from which abrasive material is emitted and a mask which is arranged in the region of the nozzle and which is composed of a plurality of holes each having a shape corresponding to the symbols to be engraved on the window. In use, the abrasive material emerging from the holes at high speed engraves the symbols contained in the mask on the window. The mask can be modified so that the symbols to be engraved on the window can be changed.

The embodiment just described is particularly advantageous since it combines two different systems for the identification of the motor vehicle, one electronic and one visual. Moreover, it enables both a dynamic data collection system and a theft deterrent system to be associated with the motor vehicle simultaneously, both systems being connected to remote electronic databases that can be consulted in real time when necessary by the respective operators, authorized centres and police authorities.

Naturally, the principle of the invention remaining the same, the forms of embodiment and details of construction may be varied widely with respect to those described and illustrated, without thereby departing from the scope of the invention as defined by the appended claims.

## Claims

1. A system for the automatic identification of a vehicle, comprising electronic identification means associated with a vehicle and electronic means for reading and/or writing the electronic identification means associated with the vehicle, the electronic identification means and the electronic reading and/or writing means comprising radio frequency transmission and receiving devices, the electronic identification means comprising at least one HF radio frequency transmission device and at least one UHF radio frequency transmission device.

2. A system according to Claim 1, where the at least one HF radio frequency transmission device can be read and/or written at a distance of between about 10 and 90 cm and the at least one UHF radio frequency transmission device can be read and/or written at a distance of between about 300 and 1000 cm.

3. A system according to Claim 1 or Claim 2, where the at least one HF radio frequency transmission device is fixed, in use, to a visible portion of the vehicle and the at least one UHF radio frequency transmission device is fitted on a portion of the vehicle structure in a position that is not readily visible.

4. A system according to any one of preceding claims, **characterized in that** the electronic identification means comprise an electronic memory.

5. A system according to any one of preceding claims, **characterized in that** the electronic reading and/or writing means comprise an antenna, an encoding and/or recognition device, and a user interface for the entry and display of the data input and output.

6. A system according to any one of preceding claims, **characterized in that** the electronic reading and/or writing means comprise additional electronic storage means on which all of the reading and writing activities performed by the electronic reading and/or writing means are stored.

7. A system according to any one of the preceding claims, **characterized in that** the data entered on the electronic identification means on the microchip are encrypted so as not to permit reading and/or modification thereof without a predetermined access key.

8. A vehicle identification system, **characterized in that** it comprises an automatic electronic identification system according to any one of Claims 1 to 7, the system being associated with a vehicle identification system comprising an identification code of the vehicle imprinted on the vehicle's windows.

9. A method of identifying a vehicle, comprising the following steps:
- providing at least one vehicle of which a plurality of data is to be identified;
- providing electronic identification means associated with the vehicle and comprising archiving means;
- providing electronic means for reading and/or writing the electronic identification means associated with the vehicle;
- selecting and identifying sets of information comprising data identifying the vehicle and/or technical data and/or additional information relating to the vehicle; and
- transferring the sets of information from and to the electronic identification means associated with the vehicle by means of the electronic reading and/or writing means;
the electronic identification means comprising at least one HF radio frequency transmission device and at least one UHF radio frequency transmission device.

10. A method of identifying a vehicle according to Claim 9, further comprising the following steps:
- imprinting an identification code of the vehicle on the windows of the vehicle;
- registering the data relating to the vehicle, correlated with the code.

## Patentansprüche

1. System zur automatischen Identifikation eines Fahrzeugs mit elektronischen Identifikationsmitteln, die einem Fahrzeug zugeordnet sind, und elektronischen Mitteln zum Lesen und/oder Beschreiben der dem Fahrzeug zugeordneten elektronischen Identifikationsmittel, wobei die elektronischen Identifikationsmittel und die **elektronischen Lese- und/oder Schreibmittel Hochfrequenz-Sende- und -Empfangseinrichtungen umfassen, wobei die elektronischen** Identifikationsmittel mindestens eine HF-Hochfrequenz-Sendeeinrichtung und mindestens eine UHF-Hochfrequenz-Sendeeinrichtung umfassen.

2. System nach Anspruch 1, wobei die mindestens eine HF-Hochfrequenz-Sendeeinrichtung in einer Distanz von zwischen etwa 10 und 90 cm gelesen und/oder beschrieben werden kann und die mindestens eine UHF-Hochfrequenz-Sendeeinrichtung in einer Distanz von zwischen etwa 300 und 1000 cm gelesen und/oder beschrieben werden kann.

3. System nach Anspruch 1 oder Anspruch 2, wobei die mindestens eine HF-Hochfrequenz-Sendeeinrichtung im Gebrauch an einem sichtbaren Teil des Fahrzeugs fixiert ist und die mindestens eine UHF-Hochfrequenz-Sendeeinrichtung an einem Teil der Fahrzeugstruktur an einer Position angebracht ist, die nicht ohne weiteres sichtbar ist.

4. System nach einem der vorhergehenden Ansprüche, **dadurch gekennzeichnet, dass** die elektronischen Identifikationsmittel einen elektronischen Speicher umfassen.

5. System nach einem der vorhergehenden Ansprüche, **dadurch gekennzeichnet, dass** die elektronischen Lese-und/oder Schreibmittel eine Antenne, eine Codierungs-und/oder Erkennungseinrichtung und eine Benutzerschnittstelle zur Eingabe und Anzeige der eingegebenen und ausgegebenen Daten umfassen.

6. System nach einem der vorhergehenden Ansprüche, **dadurch gekennzeichnet, dass** die elektronischen Lese-und/oder Schreibmittel zusätzliche elektronische Speichermittel umfassen, auf denen alle durch die **elektronischen Lese- und/oder Schreibmittel** ausgeführten Lese- und Schreibaktivitäten gespeichert werden.

7. System nach einem der vorhergehenden Ansprüche, **dadurch gekennzeichnet, dass** die auf den elektronischen Identifikationsmitteln auf dem Mikrochip eingegebenen Daten verschlüsselt werden, um so ein Lesen und/oder eine Modifikation hiervon ohne einen vorbestimmten Zugangsschlüssel nicht zu gestatten.

8. Fahrzeugidentifikationssystem, **dadurch gekennzeichnet, dass** es ein automatisches elektronisches Identifikationssystem nach einem der Ansprüche 1 bis 7 **umfasst, wobei das System einem Fahrzeug-identifikationssystem** zugeordnet ist, das einen Identifikationscode des Fahrzeugs umfasst, der auf den Fenstern des Fahrzeugs aufgedruckt ist.

9. Verfahren zum Identifizieren eines Fahrzeugs, das die folgenden Schritte umfasst:
- Bereitstellen mindestens eines Fahrzeugs, von dem eine Vielzahl von Daten zu identifizieren ist;
- Bereitstellen von elektronischen Identifikationsmitteln, die dem Fahrzeug zugeordnet sind und Archivierungsmittel umfassen;
- Bereitstellen von elektronischen Mitteln zum Lesen und/oder Beschreiben der dem Fahrzeug zugeordneten elektronischen Identifikationsmittel;
- **Auswählen und Identifizieren von** 5Informationssätzen, umfassend Daten, die das Fahrzeug identifizieren, und/oder technische Daten und/oder zusätzliche Informationen bezüglich des Fahrzeugs; und
- Transferieren der Informationssätze von und zu den dem **Fahrzeug zugeordneten elektronischen** Identifikationsmitteln mittels der elektronischen Lese-und/oder Schreibmittel;
wobei die elektronischen Identifikationsmittel mindestens eine HF-Hochfrequenz-Sendeeinrichtung und mindestens eine UHF-Hochfrequenz-Sendeeinrichtung umfassen.

10. Verfahren zum Identifizieren eines Fahrzeugs nach Anspruch 9, das ferner die folgenden Schritte umfasst:
- Aufdrucken eines Identifikationscodes des Fahrzeugs auf die Fenster des Fahrzeugs;
- Registrieren der das Fahrzeug betreffenden Daten, korrelierend mit dem Code.

## Revendications

1. Système pour l'identification automatique d'un véhicule, comprenant des moyens d'identification électronique associés à un véhicule et des moyens électroniques pour lire et/ou écrire les moyens d'identification électronique associés au véhicule, les moyens d'identification électronique et les moyens de lecture et/ou d'écriture électronique comprenant des dispositifs de transmission et de réception radiofréquence, les moyens d'identification électronique comprenant au moins un dispositif de transmission radiofréquence HF et au moins un dispositif de transmission radiofréquence UHF.

2. Système selon la revendication 1, dans lequel le au moins un dispositif de transmission radiofréquence HF peut être lu et/ou écrit à une distance entre environ 10 et 90 cm et le au moins un dispositif de transmission radiofréquence UHF peut être lu et/ou écrit à une distance entre environ 300 et 1000 cm.

3. Système selon la revendication 1 ou la revendication 2, dans lequel le au moins un dispositif de transmission radiofréquence HF est fixé, en cours d'utilisation, à une portion visible du véhicule et le au moins un dispositif de transmission radiofréquence UHF est ajusté sur une portion de la structure du véhicule dans une position qui n'est pas immédiatement visible.

4. Système selon l'une quelconque des revendications précédentes, **caractérisé en ce que** les moyens d'identification électronique comprennent une mémoire électronique.

5. Système selon l'une quelconque des revendications précédentes, **caractérisé en ce que** les moyens de lecture et/ou d'écriture électronique comprennent une antenne, un dispositif d'encodage et/ou de reconnaissance, et une interface utilisateur pour la saisie et l'affichage de données d'entrée et de sortie.

6. Système selon l'une quelconque des revendications précédentes, **caractérisé en ce que** les moyens de lecture et/ou d'écriture électronique comprennent des moyens de stockage électronique additionnels sur lesquels toutes les activités de lecture et d'écriture exécutées par les moyens de lecture et/ou d'écriture électronique sont stockées.

7. Système selon l'une quelconque des revendications précédentes, **caractérisé en ce que** les données entrées sur les moyens d'identification électronique sur la puce électronique sont cryptées afin de ne pas permettre la lecture et/ou la modification de celles-ci sans une clé d'accès prédéterminée.

8. Système d'identification de vehicule, **caractérisé en ce qu'**il comprend un système d'identification électronique automatique selon l'une quelconque des revendications 1 à 7, le système étant associé à un système d'identification de véhicule comprenant un code d'identification du véhicule imprimé sur les vitres du véhicule.

9. Méthode d'identification de véhicule, comprenant les étapes suivantes :
- fournir au moins un véhicule pour lequel une pluralité de données est à identifier ;
- fournir des moyens d'identification électronique associés au véhicule et comprenant des moyens d'archivage ;
- fournir des moyens électroniques pour lire et/ou écrire les moyens d'identification électronique associés au vehicule ;
- sélectionner et identifier des jeux d'information comprenant des données identifiant le vehicule et/ou des données techniques et/ou des informations additionnelles relatives au vehicule ; et
- transférer les jeux d'information depuis et vers les moyens d'identification électroniques associés au vehicule à l'aide des moyens de lecture et/ou d'écriture électronique ;
les moyens d'identification électronique comprenant au moins un dispositif de transmission radiofréquence HF et au moins un dispositif de transmission radiofréquence UHF.

10. Méthode d'identification de véhicule selon la revendication 9, comprenant en outre les étapes suivantes :
- imprimer un code d'identification du véhicule sur les vitres du véhicule ;
- enregistrer les données relatives au véhicule, corrélées avec le code.
